# FASCICULE DE BREVET EUROPEEN

(11) **EP 0 864 093 B1**
(45) Date de publication et mention de la délivrance du brevet: **18.12.2002**
(21) Numéro de dépôt: 97943037.8
(22) Date de dépôt: 01.10.1997
(51) Int. Cl.: G01P 15/08, G01P 15/125

(54) **CAPTEUR, NOTAMMENT ACCELEROMETRE, ET ACTIONNEUR, ET PROCEDE DE FABRICATION D'UNE STRUCTURE DE CAPTEUR OU D'ACTIONNEUR A ISOLATION ELECTRIQUE LOCALISEE DANS UNE PLAQUE DE SUBSTRAT**
SENSOR, INSBESONDERE AKZELEROMETER, STELLGLIED UND HERSTELLUNGSVERFAHREN FÜR EINE SENSOR- ODER STELLGLIEDSTRUKTUR MIT STELLENWEISER ELEKTRISCHER ISOLATION
SENSOR, IN PARTICULAR ACCELEROMETER, AND ACTUATOR, AND METHOD FOR MAKING A SENSOR OR ACTUATOR STRUCTURE WITH ELECTRIC INSULATION LOCALISED IN A SUBSTRATE PLATE

(30) Priorité: 03.10.1996 FR 9612062
(43) Date de publication de la demande: 16.09.1998
(73) Titulaire: COMMISSARIAT A L'ENERGIE ATOMIQUE, 75015 Paris (FR)
(72) Inventeur: BRUN, Jean, F-38800 Champagnier (FR); DANEL, Jean-Sébastien, F-38100 Grenoble (FR)
(74) Mandataire: Dubois-Chabert, Guy
(86) Numéro de dépôt international: FR9701733
(87) Numéro de publication internationale: WO98014786

(56) Documents cités:
- EP-A- 0 557 219
- US-A- 5 286 944
- US-A- 5 364 497
- US-A- 5 408 119

## Description

### Domaine technique

L'invention se rapporte à une structure de capteur ou d'actionneur et à un procédé de fabrication dune structure de capteur ou d'actionneur à isolation électrique localisée dans une plaque de substrat. L'invention concerne en particulier une structure d'accéléromètre et son procédé de fabrication. On entend par accéléromètre un capteur d'accélération comportant pour l'essentiel un élément mobile de masse m et des moyens pour mesurer la force F=mγ exercée sur l'élément mobile et due à l'accélération γ d'un corps en mouvement sur lequel l'accéléromètre est monté.

L'accélération est aujourd'hui un paramètre qu'il est de plus en plus utile et nécessaire de connaître pour les besoins industriels, notamment dans le domaine spatial et aéronautique, mais aussi pour des applications grand public comme l'automobile pour le contrôle de suspension active ou de ballons gonflables de sécurité (air-bag en terminologie anglo-saxonne).

Le développement de ces dernières utilisations nécessite une diminution très importante des coûts de fabrication, tout en conservant des qualités métrologiques acceptables des capteurs.

De façon générale, Les accéléromètres de l'invention sont utilisables dans tous les domaines où l'on souhaite mesurer l'accélération d'un corps en mouvement.

L'invention concerne également des structures de capteurs tels que des gyromètres ou des capteurs de pression, ainsi que des actionneurs.

### Etat de la technique antérieure

Un premier type d'accéléromètre connu est décrit, par exemple, dans le document (1) dont la référence est indiquée à la fin de la présente description.

Le document (1) se rapporte à un accéléromètre fabriqué dans un substrat de type silicium sur isolant. Un tel substrat comporte une couche superficielle de silicium et une couche de support, également en silicium et séparée de la couche superficielle par une couche d'oxyde de silicium dite couche isolante enterrée.

Les éléments mobiles de l'accéléromètre, de même que les moyens de mesure sont gravés directement dans la couche superficielle qui est maintenue solidaire de la couche de support par l'intermédiaire de la couche isolante enterrée. La couche isolante enterrée assure également l'isolation électrique entre les différentes parties de l'accéléromètre.

Un deuxième type d'accéléromètre connu est décrit, par exemple, dans le document (2) dont la référence est également indiquée à la fin de la présente description.

Le type d'accéléromètre conforme à l'enseignement du document (2) est réalisé par microlithographie, directement dans un substrat massif. Les éléments de l'accéléromètre, et en particulier sa masse sismique mobile, sont définis par gravure du substrat selon un masque adapté.

Les différentes parties du substrat sont équipées d'électrodes métalliques formant des moyens capacitifs de mesure du déplacement de la masse sismique en mouvement. L'isolation électrique des électrodes est assurée par le substrat lui même qui est par exemple en quartz.

Les accéléromètres évoqués ci-dessus sont d'une construction complexe soit en raison de l'utilisation d'un substrat multicouche du type silicium sur isolant, soit en raison de la nécessité de prévoir sur les différentes parties de l'accéléromètre des électrodes conductrices aptes à former des moyens de mesure.

La complexité de la construction constitue un obstacle à la miniaturisation des dispositifs, à l'obtention de rendements de fabrication élevés et à la réduction des coûts des accéléromètres obtenus.

### Exposé de l'invention

La présente invention a pour but de proposer une structure de capteur, notamment d'accéléromètre, ou une structure d'actionneur formée directement dans une plaque de matériau conducteur ou semi-conducteur et ne présentant pas les limitations évoquées ci-dessus.

Un autre but de l'invention est de proposer un procédé de réalisation d'une structure de capteur, notamment d'accéléromètre, ou d'une structure d'actionneur, qui est à la fois fiable et économique.

Pour atteindre ces buts, l'invention a plus précisément pour objet une structure d'un capteur, notamment d'accéléromètre, ou d'un actionneur comprenant une première partie et au moins une deuxième partie, la deuxième partie étant mobile par rapport à la première partie et électriquement isolée de la première partie, les première et deuxième parties étant formées dans une plaque de substrat non-isolant et présentant des bords mutuellement adjacents séparés par au moins une tranchée traversant le substrat, et la deuxième partie présentant au moins un prolongement en forme de poutre, caractérisée en ce que le prolongement en forme de poutre présente une extrémité fixée sur la première partie par l'intermédiaire d'un joint isolant électrique disposé dans la tranchée traversant le substrat.

Par ailleurs, on entend par structure de capteurs, notamment d'accéléromètre, ou d'actionneur, une structure comprenant les parties fixes et mobiles de capteurs ou d'actionneurs. Il s'agit, par exemple dans le cas d'un accéléromètre, d'un cadre fixe et d'une masse sismique mobile par rapport au cadre. Les parties fixes et mobiles peuvent être équipées chacune de moyens coopérant pour détecter le mouvement relatif de ces parties. Ces moyens de détection peuvent comporter, par exemple, les armatures d'un condensateur variable avec le déplacement de la masse sismique.

La structure peut être équipée d'une pluralité de deuxièmes parties formant autant de masses sismiques pour la détection dune accélération selon différentes directions de l'espace, par exemple. De même, chaque deuxième partie peut être suspendue par un seul prolongement formant poutre ou par une pluralité de tels prolongements.

Cette technique peut s'appliquer à la réalisation d'actionneurs ou de gyromètres fabriqués dans l'épaisseur du substrat massif mais jusqu'à ce jour obtenus par des technologies de surfaces. On peut se reporter à ce sujet aux documents (3) et (4) dont les références sont indiquées à la fin de la description. Les différentes parties de la structure, soumises à des potentiels différents, sont isolées entre elles.

Pour des raisons de simplification, la description qui suit ne se rapporte qu'au cas particulier où la structure ne comporte qu'une deuxième partie et où celle-ci est suspendue par plusieurs prolongements en forme de poutre.

De plus les prolongements de la deuxième partie, en forme de poutre, sont plus simplement désignés par "poutres".

Grâce aux poutres, la deuxième partie de la structure n'est pas maintenue de façon rigide par rapport à la première partie mais est suspendue de façon élastique.

Selon un aspect important de l'invention, la plaque de substrat, et partant, les première et deuxième parties de la structure sont en un matériau non-isolant, c'est-à-dire en un matériau conducteur ou semi-conducteur. Ainsi, les première et deuxième parties forment directement les armatures d'un condensateur dont la capacité varie en fonction des mouvements de la partie mobile, en l'occurrence la deuxième partie qui forme alors une masse sismique.

A titre d'exemple, la plaque de substrat peut être en un matériau choisi parmi les matériaux semi-conducteurs suivants : Si, SiC, AsGa, les métaux suivants : Au, Ti, W, Cr, Al, Fe, Ni, Mo et les alliages de ces métaux.

Selon un aspect avantageux de l'invention, permettant de réaliser un accéléromètre sensible à une accélération selon une direction particulière, au moins un bord de chacune des première et deuxième parties peut présenter une forme en peigne, les bords en forme de peigne des première et deuxième parties étant respectivement interdigités.

On considère que les bords en forme de peigne sont interdigités, lorsque les dents de la forme en peigne de chaque partie occupent respectivement une position interdigitale entre des dents de la partie située en regard.

L'invention a également pour objet un accéléromètre comprenant une armature d'accéléromètre avec une première et au moins une deuxième parties en un matériau non-isolant électriquement, isolées et mobiles Tune par rapport à l'autre, pour former un condensateur à capacité variable, et un système de mesure permettant de déterminer les variations de la capacité dudit condensateur.

Selon l'invention, l'armature est conforme à l'armature décrite ci-dessus.

Cet aspect de l'invention permet la réalisation d'accéléromètres fiables, sensibles et de faible coût.

Enfin, l'invention a pour objet un procédé de réalisation d'une armature d'accéléromètre telle que décrite ci-dessus, comprenant une première et une deuxième parties électriquement isolées, l'une par rapport à l'autre, et formées dans une plaque de substrat non-isolant, la deuxième partie étant mobile par rapport à la première partie et présentant au moins un prolongement en forme de poutre fixé sur la première partie. Le procédé comprend les étapes successives suivantes :
a) découpe dans la plaque de substrat d'un évidement dans chaque région correspondant à une extrémité libre d'un prolongement de la deuxième partie devant être formée dans la plaque de substrat,
b) mise en place dans chaque évidement d'un matériau isolant électrique,
c) gravure dans la plaque d'au moins une tranchée de découpage séparant les première et deuxième parties et définissant leurs bords adjacents, le matériau isolant dans les évidements étant préservé lors de cette gravure pour former un joint isolant qui relie à la première partie l'extrémité de chaque prolongement de la deuxième partie.

Selon une première mise en oeuvre du procédé, on découpe lors de l'étape a) des évidements traversants dans la plaque, c'est-à-dire des évidements qui s'étendent de part en part à travers l'épaisseur de la plaque.

Selon une variante, lors de l'étape a) du procédé, on découpe des évidements non traversants dans la plaque en laissant subsister un "fond de plaque" dans chaque évidement. Le fond de plaque présente, par exemple, une épaisseur de 300 µm pour un évidement sur une épaisseur de 500 µm.

Dans ce cas, le procédé comporte en outre, après la mise en place dans les évidements du matériau isolant électrique, l'amincissement de la plaque de substrat pour éliminer le fond de plaque dans chaque évidement.

Le matériau isolant électrique disposé dans les évidements constitue un joint relié aux première et deuxième parties sur une portion de leur tranche et s'étend sur toute l'épaisseur de la plaque. Après l'amincissement de la plaque, le joint affleure sur les deux faces principales de la plaque.

D'autres caractéristiques et avantages de l'invention ressortiront mieux de la description qui va suivre, en référence aux figures des dessins annexés, donnée à titre purement illustratif et non limitatif.

### Brève description des figures

- La figure 1 est une vue de dessus d'une plaque de matériau conducteur ou semi-conducteur dans laquelle on a pratiqué des évidements,
- la figure 2 est une vue de dessus de la plaque de la figure 1, dans laquelle les évidements ont été comblés avec un matériau isolant électrique,
- la figure 3 est une vue de dessus de la plaque de la figure 1, dans laquelle on a pratiqué des tranchées séparant des première et deuxième parties d'une armature d'un accéléromètre.

### Description détaillée de modes de mise en oeuvre de l'invention

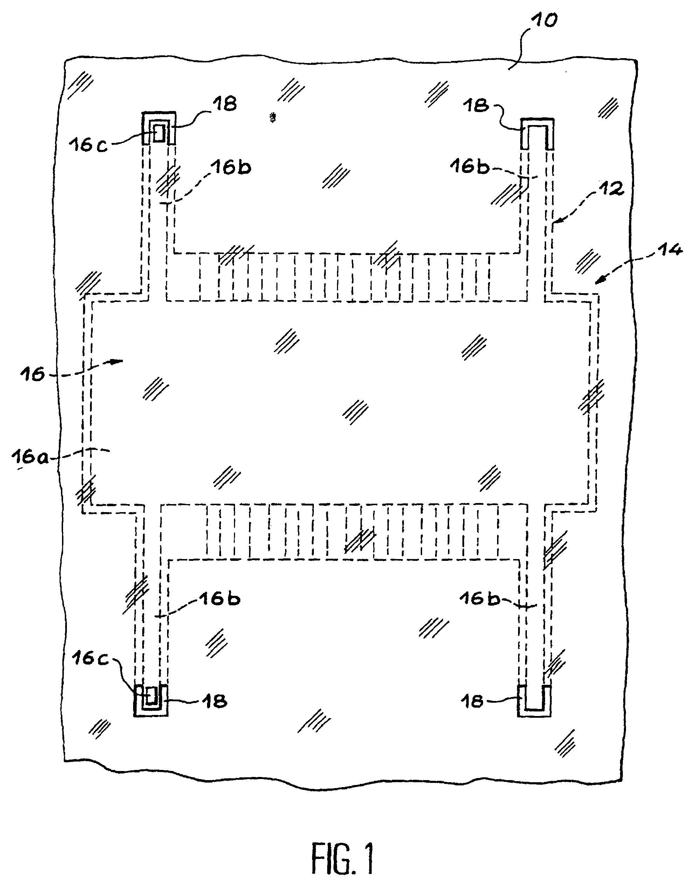

Comme le montre la figure 1, on part d'une plaque de substrat 10 en un matériau conducteur ou semi-conducteur. La plaque 10 peut être de préférence une plaque de substrat massif ou une plaque constituée d'un empilement de plusieurs couches.

Dans ce cas, on considère que la plaque est en un matériau non-isolant lorsqu'au moins une des couches qui la constitue est en un matériau présentant cette propriété. Des lignes discontinues 12 montrent à titre indicatif les limites d'une première partie 14 et d'une deuxième partie 16 d'une armature d'accéléromètre que l'on veut former dans la plaque 10.

La deuxième partie 16, qui n'est pas encore définie dans la plaque, comprend, comme le montrent les lignes discontinues 12, une région centrale 16a et quatre prolongements 16b qui sont destinés à former autant de poutres de suspension de la région centrale 16a.

De façon complémentaire, la plaque de substrat 10 peut être préalablement préparée pour faciliter ultérieurement une prise de contact notamment sur la deuxième partie isolée 16. A cet effet, il est possible d'effectuer une implantation d'ions dans une (ou plusieurs) région(s) déterminée(s) pour en augmenter la conductivité. Ces régions sont repérées sur la figure 1 avec la référence 16c et sont désignées par "prise de contact". Il est possible aussi de choisir une plaque 10 en un matériau relativement conducteur tel qu'une plaque de silicium dune résistivité de l'ordre de 10⁻²Ω.cm, par exemple.

Ensuite, dans les régions de prise de contact, on effectue par des techniques de photomasquage et de gravure connues, un dépôt de tungstène, d'une épaisseur de 200 nm, par exemple, pour assurer une conduction électrique avec le silicium de la plaque 10. Ce dépôt est suivi par un dépôt d'or d'une épaisseur de 500 nm, par exemple, pour permettre la soudure d'un fil de contact.

On peut noter que les dépôts de tungstène et d'or peuvent être limités à des régions localisées, telles que les régions 16c repérées sur la figure 1, mais peuvent également recouvrir l'ensemble de la partie 16, y compris les prolongements 16b. Dans ce cas, il convient cependant de veiller à ce que les dépôts de métal n'engendrent pas de court-circuit entre les première et deuxième parties 14, 16.

Dans une première étape de procédé, on grave dans la plaque 10 des évidements 18 situés sur la plaque en des régions entourant les extrémités des poutres 16b qui seront gravées ultérieurement.

Dans l'exemple illustré, les évidements présentent une forme en U adaptée à la largeur des poutres 16b dont ils entourent les extrémités. La largeur de l'évidement correspond sensiblement à la largeur de tranchées de découpage qui seront ultérieurement pratiquées dans la plaque pour séparer les première et deuxième parties.

Dans l'exemple décrit, les évidements 18 traversent la plaque de part en part. Ils sont pratiqués dans la plaque selon un procédé de gravure sèche ou humide ou selon un procédé d'usinage par ultrasons ou au laser.

Des équipements actuels de gravure profonde anisotrope permettent de graver des évidements ou des tranchées profondes dans des substrats. Par exemple, il est possible de graver des ouvertures ou des tranchées traversantes dans une plaque de silicium avec une épaisseur de l'ordre de 500 µm ou plus.

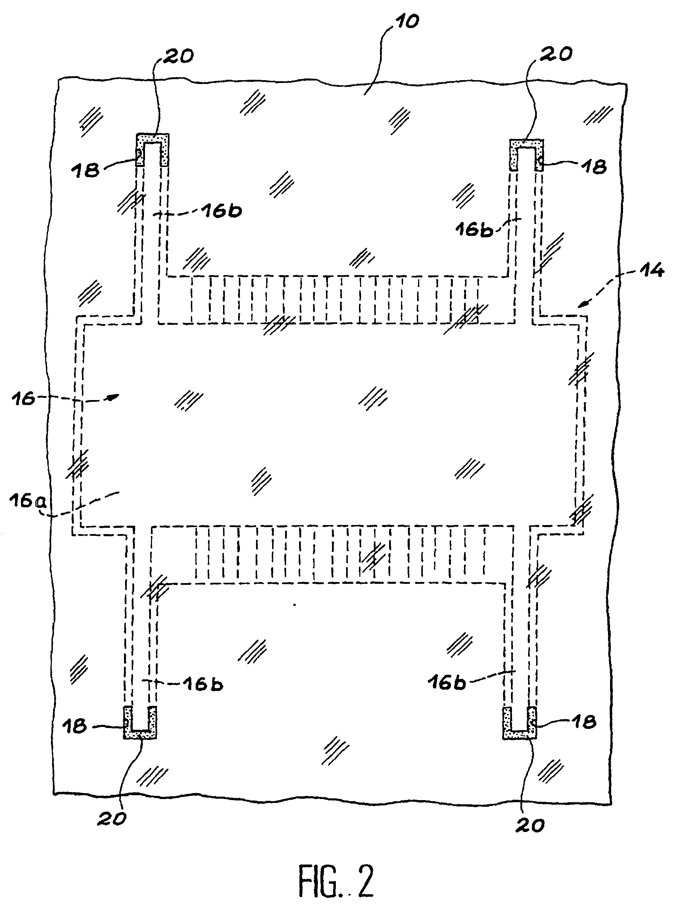

Une étape suivante du procédé est illustrée à la figure 2.

Elle correspond à la mise en place dans les évidements d'un matériau isolant électrique 20.

On considère qu'un matériau est isolant électrique lorsqu'il présente une conductivité électrique sensiblement négligeable par rapport à la conductivité électrique du matériau de la plaque 10.

On considère, par ailleurs, que les évidements 18, même s'ils sont ultérieurement comblés par le matériau isolant 20, font partie des tranchées séparant les première et deuxième parties, au même titre que des tranchées de découpage pratiquées ultérieurement et décrites plus loin.

La mise en place du matériau isolant dans les tranchées peut comporter par exemple le dépôt d'une goutte de colle isolante au centre de la plaque 10, la mise en place d'un film de mousse en silicone sur la face de la plaque comportant la goutte, puis la mise sous presse de l'ensemble pour forcer la colle dans les évidements 18. La colle est par exemple une colle de type E505 de marque Epotechni.

La colle peut être remplacée par tout polymère ou résine époxy liquide, par exemple, qui est susceptible de polymériser ou sécher après son introduction dans les évidements 18. Le polymère ou la résine doivent toutefois être choisis électriquement isolants.

Selon une variante, le matériau isolant dans les évidements 18 peut être formé par dépôt ou par croissance cristalline. Il s'agit alors, par exemple, d'une couche de silicium ou de nitrure de silicium.

Sur la figure 2, le matériau isolant affleure à la surface de la plaque 10. Ainsi le joint n'est en contact avec les première et deuxième parties que sur leurs bords de chant en regard à l'extrémité de chaque poutre. Toutefois, la couche de matériau isolant formée dans les évidements peut aussi s'étendre, dans certains cas, au moins en partie sur les faces principales de la plaque 10.

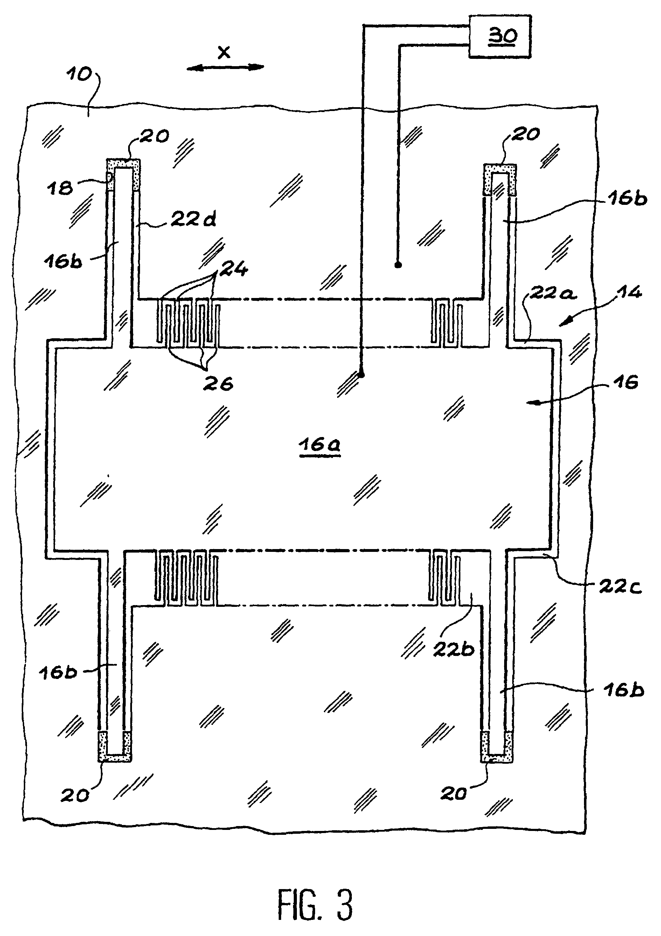

Une étape suivante du procédé est illustrée à la figure 3. Cette étape correspond à la gravure de tranchées de découpage 22a, 22b, 22c et 22d. Lors de cette gravure, effectuée selon l'un des procédés évoqués ci-dessus, les joints de matériau isolant 20 sont préservés.

A l'exception de ces joints, les tranchées séparent entièrement les première et deuxième parties 14, 16 qui se trouvent ainsi électriquement isolées.

Comme le montre la figure 3, les bords adjacents des première et deuxième parties présentent respectivement une forme de peigne avec des dents 24 et 26 interdigitées.

Les parties 14 et 16, et plus particulièrement les dents 24 et 26 forment respectivement les armatures d'un condensateur.

Un mouvement de la partie 16 selon la direction X, indiquée sur la figure 3 par une flèche, parallèlement à la plaque 10, est susceptible de provoquer une variation de la capacité du condensateur.

Ainsi, on forme un accéléromètre en reliant respectivement les parties 14 et 16 à un système de mesure 30 représenté de façon très schématique sur la figure 3. Le système de mesure comprend, par exemple, un capacimètre et une unité de calcul pour convertir une variation de capacité mesurée en une valeur d'accélération subie par l'accéléromètre.

On peut se reporter à ce sujet au document (2) cité à la fin de la présente description.

### DOCUMENTS CITES

***(1)***
   FR-A-2 700 065
***(2)***
   FR-A-2 558 263
***(3)***
   Comb actuators for xy-microstages de V.P. Jaecklin et al.
   Sensors and Actuators A, 39 (1993) 83-89
***(4)***
   A micromachined vibrating gyroscope de K. Tanaka et al.
   Yokohama Research & Development Center, murata manufacturing Co., Ltd. 1-18-1 akusan, Midori-ku, Yokohama, 226, Japan, IEE 1995, pp. 278-281.

## Revendications

1. Structure de capteur ou d'actionneur comprenant une première partie (14) et au moins une deuxième partie (16), la deuxième partie étant mobile par rapport à la première partie et électriquement isolée de la première partie, les première et deuxième parties étant formées dans une plaque de substrat (10) non-isolant et présentant des bords mutuellement adjacents séparés par au moins une tranchée (18, 22a, 22b, 22c, 22d) traversant le substrat (10), et la deuxième partie (16) présentant au moins un prolongement (16b) en forme de poutre, **caractérisée en ce que** chaque prolongement en forme de poutre (16b) présente une extrémité fixée sur la première partie par l'intermédiaire d'un joint isolant électrique (20) disposé dans la tranchée traversant le substrat.

2. Structure de capteur ou d'actionneur selon la revendication 1, **caractérisée en ce que** chaque joint (20) est en contact avec les première et deuxième parties sur leurs bords en regard à l'extrémité de chaque prolongement en forme de poutre.

3. Structure de capteur ou d'actionneur selon la revendication 1, **caractérisée en ce que** la plaque de substrat (10) est en un matériau choisi parmi les matériaux semi-conducteurs suivants : Si, SiC, AsGa, les métaux suivants : Au, Ti, W, Cr, Al, Fe, Ni, Mo et les alliages de ces métaux.

4. Structure de capteur ou d'actionneur selon l'une des revendications précédentes, **caractérisée en ce que** au moins un bord de chacune des première (14) et deuxième (16) parties présente une forme en peigne (24, 26), les bords en forme en peigne des première et deuxième parties étant respectivement interdigités.

5. Capteur ou actionneur comprenant une structure de capteur, respectivement d'actionneur, avec une première (14) et au moins une deuxième (16) parties en un matériau électriquement non-isolant, isolées et mobiles l'une par rapport à l'autre, pour former un condensateur à capacité variable, et un système de mesure (30) permettant de déterminer les variations de la capacité dudit condensateur, **caractérisé en ce que** la structure est conforme à l'une quelconque des revendications précédentes.

6. Procédé de réalisation d'une structure de capteur ou d'actionneur comprenant une première (14) et une deuxième (16) parties électriquement isolées, l'une par rapport à l'autre, et formées dans une plaque (10) de substrat non-isolant, la deuxième partie (16) étant mobile par rapport à la première partie et présentant au moins un prolongement (16b) en forme de poutre, fixé sur la première partie, le procédé comprenant les étapes successives suivantes :
a) découpe dans la plaque de substrat d'un évidement (18) dans chaque région correspondant à une extrémité libre d'un prolongement (16b) de la deuxième partie (16) devant être formée dans la plaque de substrat (10),
b) mise en place dans chaque évidement (18) d'un matériau isolant électrique (20),
c) gravure dans la plaque d'au moins une tranchée de découpage séparant les première (14) et deuxième parties (16) et définissant leurs bords adjacents, le matériau isolant (20) dans les évidements (18) étant préservé lors de cette gravure pour former un joint isolant qui relie à la première partie l'extrémité de chaque prolongement de la deuxième partie.

7. Procédé selon la revendication 6, **caractérisé en ce que** lors de l'étape a) on découpe, dans la plaque, des évidements (18) traversants.

8. Procédé selon la revendication 6, **caractérisé en ce que** lors de l'étape a) on découpe des évidements (18) non-traversants en laissant subsister un fond de plaque dans chaque évidement, et **en ce que** le procédé comporte en outre, après la mise en place dans les évidements du matériau isolant électrique, l'amincissement de la plaque de substrat pour éliminer le fond de plaque dans chaque évidement.

9. Procédé selon la revendication 8, **caractérisé en ce qu'**on effectue l'amincissement de la plaque (10) par un traitement mécanique, physique ou chimique.

## Patentansprüche

1. Sensor- oder Stellgliedstruktur mit einem ersten Teil (14) und wenigstens einem zweiten Teil (16), wobei der zweite Teil in Bezug auf den ersten Teil beweglich ist und von dem ersten Teil elektrisch isoliert ist, der erste und der zweite Teil in einer nicht-isolierenden Substratplatte (10) ausgebildet sind und benachbarte Ränder aufweisen, getrennt durch wenigstens einen das Substrat (10) durchquerenden Einschnitt (18, 22a, 22b, 22c, 22d), und der zweite Teil (16) wenigstens eine balkenförmige Verlängerung (16b) aufweist,
**dadurch gekennzeichnet,**
**dass** jede balkenförmige Verlängerung (16b) ein Ende hat, das an dem ersten Teil durch ein elektrisch isolierendes Verbindungselement (20) befestigt ist, angebracht in dem das Substrat durchquerenden Einschnitt.

2. Sensor- oder Stellgliedstruktur nach Anspruch 1, **dadurch gekennzeichnet, dass** jedes Verbindungselement (20) mit dem ersten und dem zweiten Teil an den Abschnitten ihrer Ränder Kontakt hat, die dem Ende jeder balkenförmigen Verlängerung gegenüberstehen.

3. Sensor- oder Stellgliedstruktur nach Anspruch 1, **dadurch gekennzeichnet, dass** die Substratplatte (10) aus einem Material ist, das ausgewählt wird unter den folgenden Halbleitermaterialien: Si, SiC, AsGa, oder den folgenden Metallen: Au, Ti, W, Cr, Al, Fe, Ni, Mo und den Legierungen dieser Metalle.

4. Sensor- oder Stellgliedstruktur nach einem der vorangehenden Ansprüche, **dadurch gekennzeichnet, dass** wenigstens ein Rand sowohl des ersten (14) als auch des zweiten (16) Teils die Form eines Kamms (24, 26) aufweist, wobei die kammförmigen Ränder des ersten und des zweiten Teils jeweils ineinander greifen.

5. Sensor oder Stellglied, eine Sensor- bzw. Stellgliedstruktur umfassend, mit einem ersten (14) und wenigstens einem zweiten (16) Teil aus einem elektrisch nicht-isolierenden Material, voneinander isoliert und untereinander beweglich, um einen Kondensator mit variabler Kapazität und ein Messsystem (30) zu bilden, das ermöglicht, die Veränderungen der Kapazität des genannten Kondensators zu bestimmen, **dadurch gekennzeichnet, dass** die Struktur einem der vorangehenden Ansprüche entspricht.

6. Verfahren zur Herstellung einer Sensor- oder Stellgliedstruktur mit einem ersten (14) und einem zweiten (16) Teil, elektrisch voneinander isoliert und ausgebildet in einer nicht-isolierenden Substratplatte (10), wobei der zweite Teil (16) in Bezug auf den ersten Teil beweglich ist und wenigstens eine an dem ersten Teil befestigte balkenförmige Verlängerung (16b) aufweist, wobei das Verfahren die folgenden Schritte umfasst:
a) Schneiden einer Aussparung (18) in die Substratplatte in jedem Bereich, der einem freien Ende einer Verlängerung (16b) des zweiten Teils (16) entspricht, der in der Substratplatte (10) ausgebildet werden soll,
b) Anbringen eines elektrisch isolierenden Materials (20) in jeder Aussparung (18),
c) Ätzen wenigstens eines die Platte durchquerenden Einschnitts, der den ersten (14) und den zweiten (16) Teil trennt und ihre benachbarten Ränder definiert, wobei das isolierende Material (20) in den Aussparungen (18) bei dieser Ätzung erhalten bleibt, um ein isolierendes Verbindungselement zu bilden, welches das Ende jeder Verlängerung des zweiten Teils mit dem ersten Teil verbindet.

7. Verfahren nach Anspruch 6, **dadurch gekennzeichnet, dass** man während des Schritts a) Aussparungen (18) schneidet, die die Platte durchqueren.

8. Verfahren nach Anspruch 6, **dadurch gekennzeichnet, dass** man während des Schritts a) die Platte nicht durchquerende Aussparungen (18) schneidet, indem man in jeder Aussparung einen Plattenboden bestehen lässt, und dadurch, dass das Verfahren außerdem, nach dem Anbringen des elektrisch isolierenden Materials in den Aussparungen, ein Dünnermachen der Substratplatte umfasst, um den Plattenboden jeder Aussparung zu entfernen.

9. Verfahren nach Anspruch 8, **dadurch gekennzeichnet, dass** das Dünnermachen der Platte (10) durch eine mechanische, physikalische oder chemische Bearbeitung erfolgt.

## Claims

1. Sensor or actuator structure comprising a first part (14) and at least one second part (16), the second part being mobile in relation to the first part and electrically insulated from the first part, the first and second parts being formed in a non-insulating substrate wafer (10) and having mutually adjacent edges separated by at least one cut (18, 22a, 22b, 22c, 22d) going right through the substrate (10), and the second part (16) having at least one extension (16b) in the form of a beam, **characterised in that** each extension in the form of a beam (16b) has one end fixed onto the first part by means of an electrically insulating joint (20) arranged in the cut going through the substrate.

2. Sensor or actuator structure according to Claim 1, **characterised in that** each joint (20) is in contact with the first and second parts on their edges facing the end of each extension in the form of a beam.

3. Sensor or actuator structure according to Claim 1, **characterised in that** the substrate wafer (10) is made of a material chosen from among the following semi-conductor materials : Si, SiC, AsGa, the following metals : Au, Ti, W, Cr, Al, Fe, Ni, Mo and alloys of these metals.

4. Sensor or actuator structure according to one of the preceding Claims, **characterised in that** at least one edge of each of the first (14) and second (16) parts has the shape of a comb (24, 26), the edges in the shape of a comb of the first and second parts being respectively interdigitated.

5. Sensor or actuator comprising respectively a sensor or actuator structure, with a first (14) and at least one second (16) part made of an electrically non-insulating material, which are insulated and movable in relation to one another, to form a variable capacity capacitor, and a system of measurement (30) that permits the determination of variations in the capacity of said capacitor, **characterised in that** the structure conforms to any one of the preceding Claims.

6. Method of producing a sensor or actuator structure comprising a first 14) and a second (16) part, electrically insulated in relation to one another, and formed in a non-insulating substrate wafer (10), the second part (16) being mobile in relation to the first part and having at least one extension (16b) in the form of a beam, fixed to the first part, the method comprising the following successive steps :
a) cutting a void (18) in the substrate wafer in each area corresponding to a free end of an extension (16b) of the second part (16) before being formed in the substrate wafer (10),
b) placing an electrically insulating material (20) in each void (18)
c) etching into the wafer at least one cut separating the first (14) and second (16) parts and defining their adjacent edges, the insulating material (20) in the voids (18) being kept intact during this etching to form an insulating joint which links the end of each extension of the second part to the first part.

7. Method according to Claim 6, **characterised in that** during step a) voids (18) that go right through are cut into the wafer.

8. Method according to Claim 6, **characterised in that** during step a) voids (18) that do not go right through are cut leaving a wafer bottom in each void, and **in that** the method additionally comprises, after putting electrically insulating material into place in the voids, the thinning down of the substrate wafer in order to remove the wafer bottoms in each void.

9. Method according to Claim 8, **characterised in that** the thinning down of the wafer (10) is carried out by a mechanical, physical or chemical process.
